Europäisches Patentamt

European Patent Office

Office européen des brevets

(19)

(11) Numero de publication: **0 158 579**

**A1**

(12)

# DEMANDE DE BREVET EUROPEEN

(21) Numéro de dépôt: **85450007.1**

(22) Date de dépôt: **11.03.85**

(51) Int. Cl.⁴: **A 47 J 31/40**

(30) Priorité: **13.03.84 FR 8404324**

(43) Date de publication de la demande:
**16.10.85 Bulletin 85/42**

(84) Etats contractants désignés:
**AT BE CH DE FR GB IT LI LU NL SE**

(71) Demandeur: **Gysbers, Antoine**
**Place des 4 Blancs**
**F-32400 Riscles(FR)**

(72) Inventeur: **Gysbers, Antoine**
**Place des 4 Blancs**
**F-32400 Riscles(FR)**

(74) Mandataire: **Ravina, Bernard**
**Cabinet Bernard RAVINA 24, boulevard Riquet**
**F-31000 Toulouse(FR)**

(54) Machine de fabrication et/ou de distribution de produits alimentaires liquides ou pâteux, chauds ou froids.

(57) Machine de fabrication et/ou de distribution de produits alimentaires liquides ou pâteux, froids ou chauds.

La présente invention concerne une machine de fabrication et/ou de distribution de produits alimentaires liquides ou pâteux, froids ou chauds.

Cette machine se caractérise en ce qu'elle est construite à partir de modules de base identique.

Chacun des modules est un boitier parallèlépipèdique droit qui comprend deux parois latérales (1) et (2), une paroi avant (3) et une paroi arrière (4), une cloison horizontale (5) le divisant en deux parties inégales.

Le dit boitier est ouvert à sa base et à son sommet.

Fig 1

EP 0 158 579 A1

La présente invention concerne une machine de fabrication et/ou de distribution de produits alimentaires liquides ou pâteux, froids ou chauds, par exemple.

La dite machine peut être également distributrice d'objets tels que des gobelets.

On connait des machnes distributrices de produits liquides chauds à base de poudre soluble et d'eau comme le café ou le chocolat chauds.

On connait aussi des machines distributrices de produits liquides froids à base de poudre souble et d'eau comme le jus de fruits à base de poudre correspondante et d'eau.

On connait également des machines distributrices de jus de fruits qui est fourni, tout fait, aux dites machines, il est alors réfrigéré et distibué.

Ces dernières machines sont connues sous le nom "fontaine de fruits".

On connait encore des machines pour fabriquer de la crème chantilly à base de la crème fraîche.

Chaque machine de ce type est constituée d'un corps qui l'enveloppe et qui sert comme support pour ses différents organes.

Généralement, la disposition des organes constitutifs de la machine est en principe réalisée dans le but d'obtenir un encombrement le plus réduit possible.

Cela se traduit généralement par un manque d'accès facile aux différents organes, ce qui complique l'entretien et la réparation.

La présente invention vise à pallier à ces défauts, en proposant un module de base unique qui sert à construire le corps de ces machines. Ces modules de base peuvent être assemblés de différentes manières pour satisfaire les besoins particuliers de chaque machine.

0158579

La présente invention a pour objet une machine de fabrication et/ou de distribution des produits alimentaires liquides ou pâteux, froids ou chauds, ces produits pouvant être soit un mélange d'une poudre soluble et d'eau, comme par exemple le café à base de café soluble et d'eau, le chocolat à base de poudre de chocolat et de lait déshydraté et d'eau ou le jus de fruits à base de poudre correspondante et d'eau, soit un liquide réfrigéré et distribué par la machie, soit un mélange de produit pâteux et d'air comme la crème chantilly.

La dite machine peut être également distributrice d'objets tels que des gobelets.

La dite machine se caractérise essentiellement en ce qu'elle est construite à partir de modules à base identiques.

Chacun des modules est un boitier parallélépipèdique droit qui comprend deux parois latérales, une paroi avant et une paroi arrière, une cloison horizontale le divisant en deux cavités inégales : une petite cavité et une grande cavité.

Le dit boitier est ouvert à sa base et à son sommet.

Les modules de base sont superposés et juxtaposés dans un sens ou dans l'autre, en sorte que selon le besoin, la cloison horizontale soit tournée soit vers le haut, soit vers le bas.

Les parois arrières sont disposées vis à vis l'une de l'autre.

Les modules sont mis dos à dos, deux par deux, l'assemblage par superposition de paires de ces modules sert à contenir et à fixer les différents organes de la dite machine.

Suivant une forme caractéristique de réalisation, les deux parois latérales d'un module de base déposent la paroi arrière, en réalisant chacune une aile, ces ailes coopérant avec les ailes semblables d'un autre module de base mis dos à dos par rapport au premier, formant ainsi un intervalle entre les deux modules assembles.   0158579

Chaque module de base est doté d'alésages transversaux debouchant ou borgnes, pour placer des pitons de positionnement ou des tiges, reliant ainsi les modules de base superposés avec précision.

Suivant une forme de réalisation selon l'invention, une machine de fabrication et de distribution de produits alimentaires liquides froids ou chauds à base de poudre soluble et d'eau est réalisée sur deux ou trois étapes avec quatre ou six modules de base jumelés deux par deux.

Le premier étage est composé de deux modules de base mis dos à dos ; ces deux petites cavités sont tournées vers le bas.

Le module de base frontal contient un mélangeur de poudre et d'eau une vasque receveuse-livreuse de poudre et d'eau.

Le module de base arrière contient un moteur d'entrainement général et un circuit intégré blindé, une électro-vanne pour raccordement direct sur le réseau d'eau courante ; dans ce dernier cas, la machine n'a pas besoin de réservoir d'eau.

Le deuxième étage est composé de deux modules de base mis dos à dos.

Le module de base frontal a la petite cavité tournée vers le bas, ce module présente la réserve de poudre et contient un mécanisme de dosage.

Le module de base arrière à la petite cavité tournée vers le haut, ce module contient un élément de chauffe ou de réfrigération de l'eau de préparation de la boisson.

Le troisième étage est composé de deux modules de base mis dos à dos.

Les deux petites cavités sont tournées vers le bas, ces deux modules communiquent entre eux, constituant ainsi une grande réserve d'eau dans le cas où la machine est autonome en alimentation en eau.

Le mécanisme de dosage classique est composé de deux disques coaxiau munis de deux orifices décalés.

Au lieu d'utiliser un seul doseur qui donne une dose fixe, on a utilis plusieurs doseurs cylindriques ouverts qui se remplissent et qui s'éva cuent dans chaque cycle, à savoir un tour complet de deux disques.

Ainsi, en utilisant la totalité des doseurs, on a une dose finale égal à la somme des volumes des doseurs et en utilisant seulemnt un certai nombre d'entre eux, les autres étant bouchés, on a une dose final moindre et variable.

Ce système de dosage peut être remplacé par un système a tiroir dan lequel un bras mécanique pousse un tiroir sans fond placé sous l réservoir de poudre et communiquant avec lui sur une glissière dont l fond est doté d'une ouverture en regard de laquelle vient se dispose ce tiroir pour être déchargé, un ressort de rappel le ramène à s position initiale.

Le nombre de décharges effectué successivement présente une dose.

La vasque receveuse-livreuse qui reçoit de la poudre et de l'eau pou les livrer au mélangeur a un diamètre plus grand que les deux disque du mécanisme de dosage ; ceci permet de recevoir la dose de la poudr en sa totalité réduisant ainsi la périodicité du nettoyage de la machi ne nécessité par la chute de poudre au fond de celle-ci.

Un racloir rotatif qui épouse la forme intérieure de la vasque et qu effectue le même mouvement rotatif que les deux disques du système c dosage, élimine tout risque d'accumulation de la poudre dans un endroi quelconque de la vasque.

Un bac de récupération de déchets et d'eau salée situé au niveau infé rieur du module de base frontale du premier étage peut être ouvert e utilisé alors pour porter un gobelet ou bien fermé et donc escam pour laisser la place à un récipient volumineux.

tre un autre exemple de réalisation, une machine de fabrication et/ou distribution de produits alimentaires liquides ou pâteux comme, par exemple, le jus de fruits ou la crème chantilly, est construite en trois étages avec six modules de base :

Le premier étage est composé de deux modules de base mis dos à dos, les deux petites cavités sont tournées vers le bas, les deux parois arrières de deux modules sont supprimées pour laisser un espace composé de deux grandes cavités.

Le deuxième étage est composé de deux modules de base mis dos à dos, les deux petites cavités sont tournées vers le haut, les deux parois arrières de deux modules sont supprimées pour laisser un espace composé de deux grandes cavités, ce dernier constitue avec celui du premier étage un espace composé de quatre grandes cavités ; cet espace contient une unité hermétique frigorifique et un condensateur.

Le troisième étage est composé de deux modules de base, mis dos à dos, les deux petites cavités sont tournées vers le bas ; les deux grandes cavités peuvent être soit la communication entre elles pour former un grand réservoir de liquide, soit séparée.

Les deux modules de base de troisième étage sont superposés sur ceux du deuxième étage sans liaison et ils ne sont pas reliés au circuit de réfrigération.

L'espace constitué de deux petites cavités entre le deuxième et le troisième étage est réfrigéré à l'aide d'un manchon métallique étanche par rapport au fond de la petite cavité du deuxième étage.

Ce manchon assure le contact thermique entre cet espace et des tuyaux contenant du gaz de refroidissement ; cet espace peut contenir ou non un bac de régulation de la pression du liquide.

Suivant une autre forme de réalisation, une machine distributrice d'objets, tels que des gobelets et qui peut contenir un sélecteur de monnaies ou autres est composée de six modules de base sur trois étages :

- le premier étage est composé de deux modules de base mis dos à dos, le deux petites cavités sont tournées vers le haut.

  Deux parois latérales adjacentes sont supprimées pour donner accès une colonne porteuse de gobelets traversant les trois étages ; la peti te cavité du module de base frontal contient un tiroir.

- Le deuxième étage est composé de deux modules de base mis dos à dos, l module de base frontal a la petite cavité tournée vers le bas et cor tenant un tiroir et le module de base arrière est mis de telle sort que la petite cavité soit tournée, soit vers le haut, soit vers le bas

- Le troisième étage est composé de deux modules de base, mis dos à dos le module de base frontal a la grande cavité tournée vers le bas e contient un sélecteur de monnaies.

  Le module de base arrière est mis la petite cavité tournée, soit ver le haut, soit vers le bas.

.La présente invention sera mieux comprise à la lecture de la descrip tion détaillée ci-après de formes de réalisation données à titr d'exemple non limitatif illustrée par les dessins joints :

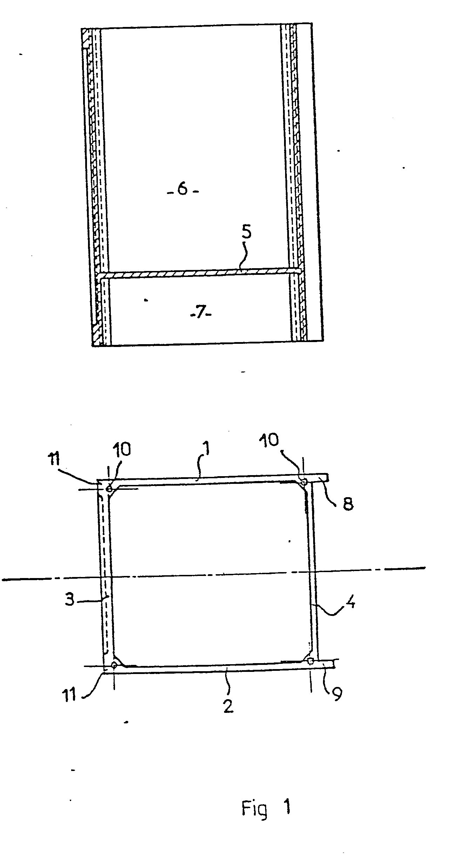

- la figure 1 présente une vue de côté et une vue de dessus d'un modu le de base,

- la figure 2 est un dessin schématique d'une machine construite à par tir des modules de base, distributrice de produits liquies à base ( poudre soluble et d'eau, ces liquides peuvent être froids ou chauds.

- la figure 3 est un dessin schématique d'une machine construite à par tir des modules de base, distributrice des liquides réfrigérés de typ "fontaine de jus de fruits".

- La figure 4 est un dessin schématique d'une machine pour fabriquer l crème chantilly ; elle est construite, elle aussi, à partir de modul de base.

La figure 5 est un dessin schématique d'une machine distributrice de gobelets et d'autres accessoires, qui contient une unité de commande. Cette machine peut être reliée à une des précédentes machines en cas de distribution payante en libre service.

la figure 6a est une vue en perspective du système de dosage à tiroir, les figures 6b,6c,6d sont des bues de côté, de face, et de dessus respectivement du tiroir.

Le module de base selon l'invention est un boitier parallélépipèdique droit, composé de deux parois latérales 1 et 2, d'une paroi avant 3 et d'une paroi arrière 4.

Il est ouvert à ses niveaux inférieur et supérieur et comporte une cloison étanche horizontale 5, qui le divise en deux cavités inégales : une grande cavité 6 et une petite cavité 7.

Les deux parois latérales 1 et 2 d'un module de base dépassent la paroi arrière 4 réalisant chacune une aile.

Ces ailes 8 et 9 coopèrent avec des ailes semblables d'un autre module de base mis dos à dos par rapport au premier pour former un intervalle entre ces deux modules.

Chaque module de base est doté d'alesages transversaux débouchant ou borgnes 10 pour placer des pitons de positionnement ou des tiges pour relier des modules de base superposés avec précision.

La paroi avant de chaque module de base comprend un léger renforcement 11 permettant d'appliquer un support publicitaire ou décoratif auto-collant.

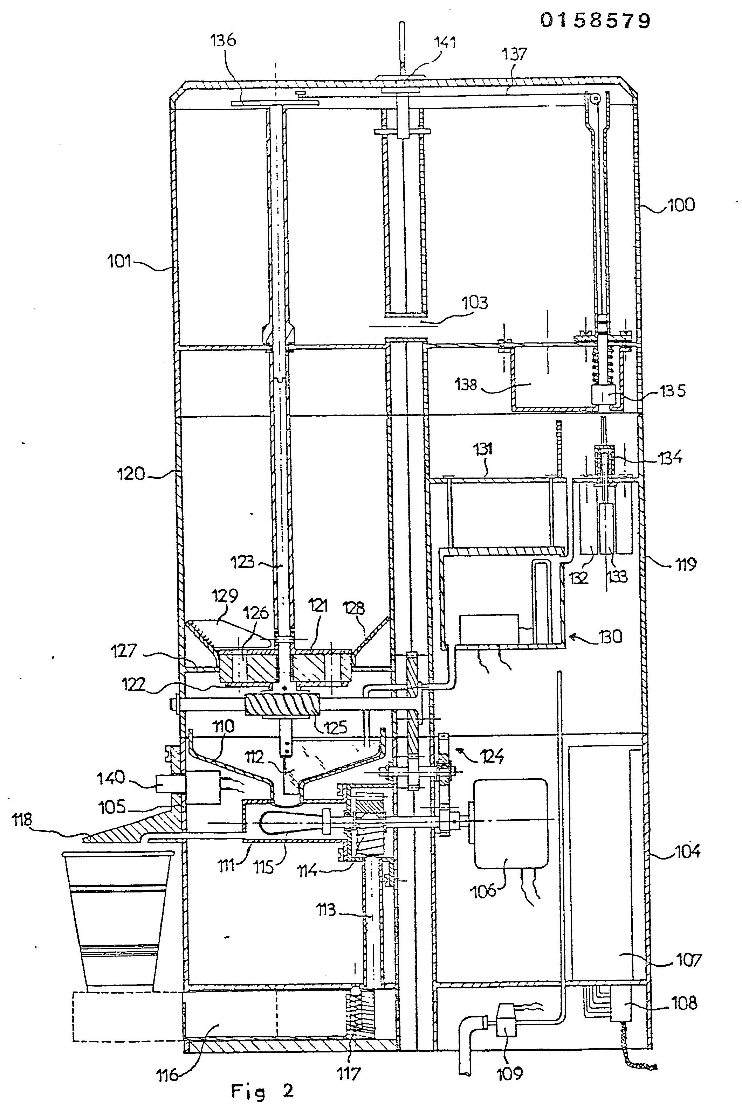

Sur la figure 2, on voit une machine distributrice de produits liquides froids ou chauds à base de poudre soluble et d'eau.

Cette machine est composée de trois étages avec six modules de base. Le dernier étage est composé de deux modules de base 100 et 101.

Les deux petites cavités sont tournées vers le bas.

Un manchon de communication 103 assemble les deux grandes cavités pou former un réservoir d'eau.

Cet étage est supprimé en cas de branchement direct de la machine su le réseau d'eau courante.

Le premier étage est composé de deux modules de base 104 et 105 mis do à dos, les deux petites cavités tournées vers le bas.

Le module de base arrière contient un moteur d'entrainement généra 106, un circuit intégré comprenant tous les composants électroniques d commande des diverses opérations, un bornier 108 pour connexion a réseau électrique, une électro-vanne 109 d'eau froide sous pression pour raccordement direct sur le réseau d'eau courante, dans le cas o on désire brancher la machine directement sur le réseau d'eau courante Cette électro-vanne est supprimée dans le cas où la machine a un réser voir d'eau ; on peut choisir entre ces deux possibilités en fonction d débit désiré de la machine.

Le module de base avant 105 contient une grande vasque 110 receveus livreuse qui reçoit de la poudre et de l'eau pour les livrer à un blo mélangeur 111.

Cette vasque est munie d'un racloir rotatif 112, ce dernier élimin tout risque d'accumulation de poudre en un endroit quelconque de l vasque 110.

Ce module de base contient aussi un extracteur de buée 113 dont le turbines 114 sont actionnées par l'axe du moteur 106 comme l'est l'or gane rotatif 115 du mélangeur 111.

Les buées extraites sont évacuées dans un bac 116 placé dans la petit cavité ; ce dernier est librement amovible, stabilisé par un ressort bille 117, coulissant et escamotable et peut être utilisé pour porte

0158579

un gobelet ou escamoté dans le cas ou un récipient serait placé sous un bec 118 d'écoulement du produit fini, à l'extérieur de la machine, pour éviter un embuage important à l'intérieur.

Le deuxième étage est composé de deux modules de base 119 et 120 posés sur le premier étage.

Le module de base frontal 120 présente un réservoir de poudre soluble ; il a la petite cavité tournée vers le bas.

Un système de dosage placé entre les deux cavités de ce module et traversant la cloison qui les sépare, est composé de deux disques 121 et 122 montés coaxialement sur un axe d'entrainement général 123.

Ce dernier est actionné par le moteur 106 à l'aide d'un ensemble d'engrenage de réduction de vitesse 124 et d'une vis sans fin 125, qui actionne un pignon, non présenté, solidaire de l'axe 123.

L'ensemble d'engrenage de réduction de vitesse 124 comprend quatre pignons à dentures droites, ce qui facilite le libre emboitage du module 120 sur le module 105.

Les deux disques 121 et 122 sont solidaires de l'axe 123 et munis chacun d'un orifice décalé par rapport à l'autre d'un quart de tour.

Entre ces deux disques sont placés plusieurs doseurs cylindriques 126 ouverts à leurs niveaux inférieur et supérieur.

Ces doseurs sont montés sur un autre disque intérieur fixé à la cloison 127 et adjacent au disque 121 de façon que seules les ouvertures des doseurs 126 permettent un passage de la poudre entre les disques 121 et 122.

Les deux disques 121 et 122 effectuent une fois un tour complet, chaque doseur se présente une seule fois devant l'orifice du disque 121 pour être rempli et une seule fois devant l'orifice du disque 122 pour être évacué.

On peut utiliser tous les doseurs à la fois pour avoir, à chaque tour, une dose totale égale à la somme des volumes des doseurs ou bien n'utiliser qu'une partie de ces doseurs pour avoir une dose inférieure à cette somme ; dans ce dernier cas, on bouche certaines ouvertures de doseurs avec des pastilles adéquates.

Le volume de la dose totale est choisi en fonction des boissons à préparer.

L'usage de plusieurs doseurs permet de choisir la dose totale et permet aussi de livrer cette dose en plusieurs étapes à la vasque 110, ce qui donne un meilleur résultat por avoir un mélange homogène.

Ce système de dosage peut être remplacé par un système à tiroir.

Le système de dosage a tiroir classiquement connu est composé d'un tiroir sans fond placé sous un réservoir de poudre ou autres, tiroir soit escamoté pour être chargé, soit tiré pour être déchargé par son fond.

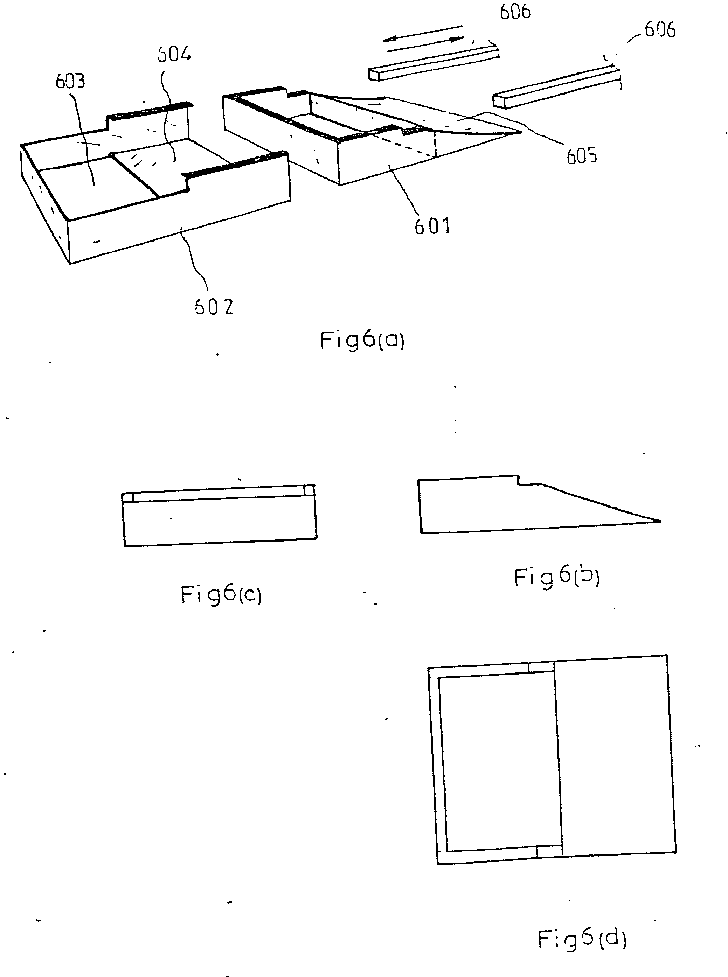

Ce système de dosage selon l'invention est un système automatique (fig.6).

Il est composé d'un tiroir sans fond 601 coulissant horizontalement dans une glissière 602 dont le fond est doté d'une ouverture 603 en regard de laquelle vient se disposer le tiroir sans fond.

Ce tiroir pouvant occuper deux positions, une position de chargement dans laquelle le dit tiroir étant disposé en regard du fond 604 de la glissière et au dessous du réservoir de poudre ou une position de déchargement en regard de l'ouverture 603.

Normalement ce tiroir occupe la première position, c'est-à-dire étant rempli de poudre.

Un bras mécanique 606 le pousse vers la deuxième position pour être déchargé et un ressort de rappel non présenté, le ramène vers la première position.

Un mouvement constitué d un chargement et d un déchargement fait un cycle.

Le côté 605 qui pénètre dans la poudre pendant le retour du tiroir à la première position a une forme biseautée, cette dernière facilite la pénétration.

Le nombre de décharge effectué successivement présente une dose. Ce nombre est réglable en fonction de la dose désirée.

Il est à noter que la vasque 110 a un diamètre plus grand que les deux disques 121 et 122, ce qui permet de recevoir la poudre dans sa totalité, réduisant ainsi la périodicité de nettoyage de la machine, necessitée par la chute de la poudre au fond.

Le fond du réservoir de poudre est muni d'une paroi inclinée 128 permettant un bon écoulement de la poudre vers le disque 121 et évitant les retenues permanentes de poudre dans les angles, il est muni également d'une lame verticale 129 retenant la poudre au-dessus des doseurs 126 afin de garantir leur remplissage parfait.

Le module de base arrière qui est disposé, sa petite cavité tournée vers le haut contient un élément de chauffe ou de réfrigération 130 de l'eau de préparation de boissons fixé dans la cloison 131.

Cet élément reçoit une dose d'eau pour la chauffer ou pour la réfrigérer et la livrer à la vasque 110.

Ce module contient aussi un électro-aimant 132 dont le moyen 133 porte un capuchon 134 muni d'un piton pour soulever éventuellement une soupape 135 qui permet l'écoulement d'une dose d'eau dans l'élément de chauffe ou de réfrigération 110.

L'ensemble de l'electro-aimant et de son moyen qui porte le capuchon est fixé dans la cloison 131.

L'axe d'entraînement général 123 traverse le module de base 101 troisième étage et porte à son extrémité une came circulaire 132 comprenant un piton excentré, auquel est attaché un fil 137 ; ce dernie

est attaché par son autre extrémité à la soupape 135.

Cet axe est divisé en deux parties à son niveau existant entre les deu

modules 101 et 120, ces deux parties s'accouplent par emboitage libr

au moment de la mise en place du bac à eau.


Un bac de régulation de la pression d'eau classique 138 est placé dan

la petite cavité du module 100.

L'orifice de remplissage de ce bac étant plus petit que l'orifice d'é

coulement, l'appel d'air de ce bac est effectué par un tuyau 139 qu

traverse la réserve d'eau.


L'actionnement de la soupape 135 s'effectue, soit par la traction d fil 137, soit par le capuchon 134 de l'électro-aimant.

La soupape est maintenue normalement en position fermée par un ressort

La synchronisation de l'arrivage d'eau et de poudre dans la vasque 11

est réglée de telle façon que l'arrivage d'eau prend fin après celui d

poudre pour laisser la vasque propre en fin de cycle.


La machine est munie d'un couvercle et fermée à clé à l'aide d'une ser rure 141.

Le fonctionnement de la machine est le suivant :


- on amorce un cycle, soit en appuyant sur un bouton poussoir 140, soi par commande d'une unité de controle et de commande, dans le cas où l

  machine est en libre service.

- Le moteur général tourne, faisant tourner les turbines 114 de l'extrac

  teur de buée, l'organe rotatif 115 du mélangeur et l'axe d'entrainemen

  général 123 à l'aide de l'ensemble de réduction de vitesse 124 et de l

  vis sans fin 125.

- Les deux disques 121 et 122 tournent faisant remplir les doseurs 12

l'un après l'autre par l'orifice du disque 121 et les faisant évacuer l'un après l'autre par l'orifice du disque 122.

En même temps, la came circulaire 136 tourne faisant tirer le fil 137 et ouvrir la soupape 135.

L'axe 123 fait une fois un tour complet, un minirupteur de cycle actionné par le disque 122 met fin au cycle, une dose de poudre est reçue dans la vasque 110.

La soupape est de nouveau en position fermée, l'eau s'écoule encore de l'élément de chauffe ou de réfrigération pour laver les traces de poudre.

Pendant le cycle, le racloir 112 actionné par l'axe d'entrainement général 123, fait un tour complet et laisse en fin du cycle, la vasque 110 propre.

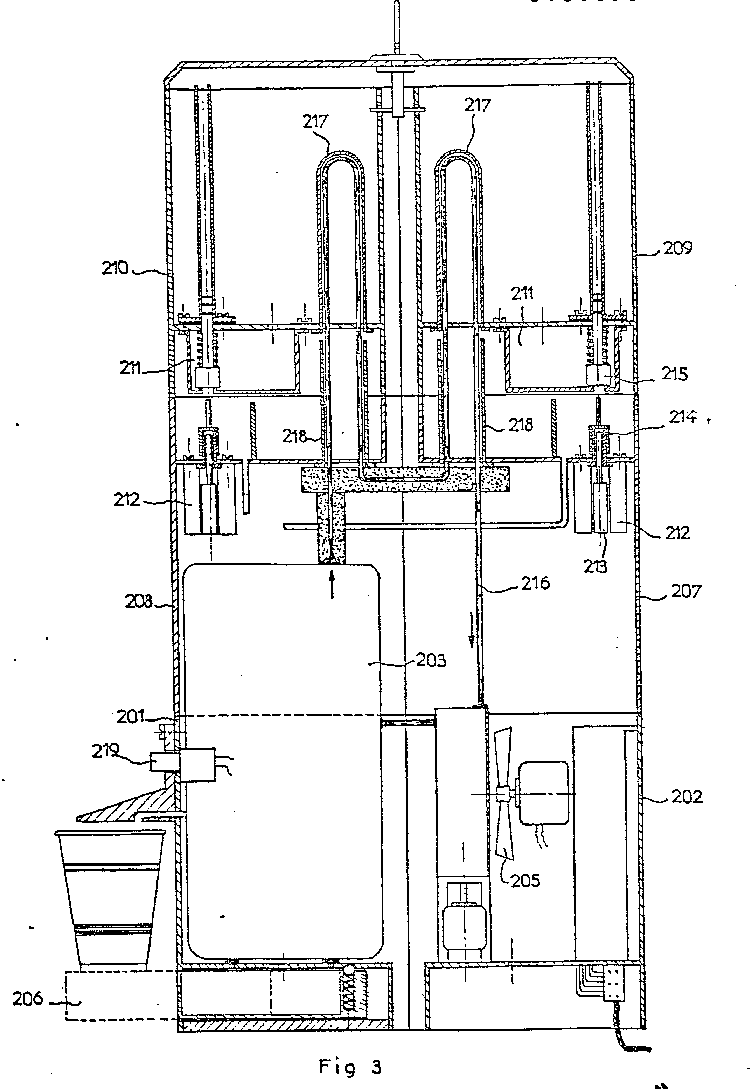

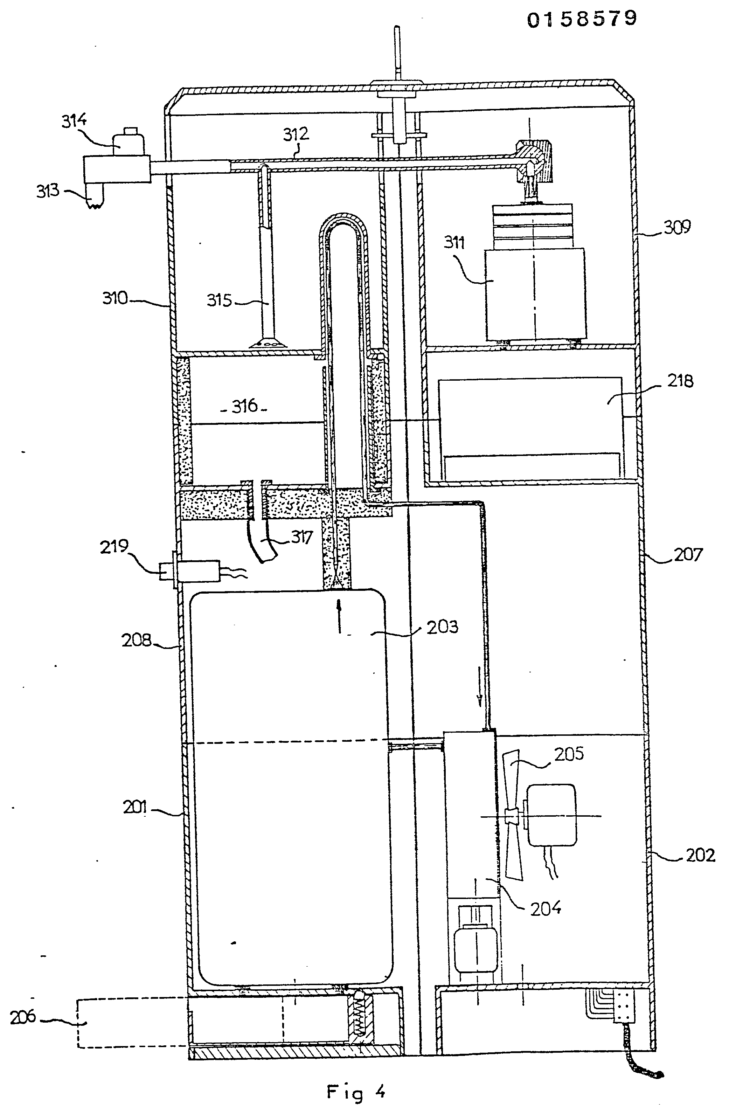

Sur les figures 3 et 4 est représentée une machine distributrice de jus de fruits à laquelle le jus est fourni.

Il est alors refrigéré et distribué par cette machine et une machine pour faire la crème chantilly ; toutes les deux sont construites sur trois étages avec six modules de base.

Dans ces deux machines :

- le premier étage est composé de deux modules de base 201 et 202 mis dos à dos, les deux petites cavités sont tournées vers le bas, les deux parois arrières sont supprimées de sorte qu'on obtient un espace composé de deux grandes cavités.

- Le deuxième étage est composé de deux modules de base 207 et 208, les deux petites cavités sont tournées vers le haut, les deux parois arrières sont supprimées de sorte qu'on obtient un espace composé de deux grandes cavités, ce dernier constitue avec celui du premier étage un espace composé de quatre grandes cavités.

Cet espace contient une unité hermétique frigorifique 203, un conden-

0158579

se ir.

Dans la petite cavité du module de base frontal, est disposé un bac 21 identique au bac 116 de la figure 2.

- Le troisième étage de la machine distributrice de jus de fruits (figu 3) est composé de deux modules de base 203 et 210 mis dos à dos, l deux petites cavités sont tournées vers le bas ; ces derniers peuve être en communication entre eux pour constituer un grand réservoir séparé pour constituer deux réservoirs de deux boissons différentes. Dans ce dernier cas, chaque module est muni d'un bac 211 de régulati de la pression de liquide classique identique au bac 138 de la figu 2, et aussi d'un électro-aimant 212 et son noyau 213, d'un capuchon 2 pour actionner une soupape 215 ; ces derniers sont identiques à leu semblabes de la figure 2.

La réfrigération de ces deux bacs est assurée par un serpentin 216 da lequel circule un gaz de refroidissement ; ce serpentin passe dans u cloche en métal 217 située dans chaque grande cavité et étanche p rapport à son fond.

L'espace des deux petites cavités des modules des 2ème et 3ème étag est réfrigéré à l'aide d'un manchon métallique 218 étanche par rappo au fond de la petite cavité du deuxième étage.

Ce manchon assure le contact thermique entre le serpentin 216 et c espace et donc sa réfrigération.

Ces deux modules de base sont superposés sur ceux du troisième éta sans liaison avec le circuit de réfrigération pour faciliter le démontage.

Le fonctionnement de la machine peut s'effectuer, soit en appuyant s un bouton poussoir 213, soit par commande d'une unité de commande et c controle dans le cas où la machine est en libre service.

Le troisième étage de la machine pour faire la crème chantilly (fig. 4

.. .. ..; se .. .. .eux modules .. .... 309 e. 310 ; les deux ...... cavi-
.s sont tournées vers le bas.

. module de base arriere est destiné à porter dans sa grande cavité un
ompresseur 311.

e dernier porte un conduit d'air 312 articulé avec le compresseur et
ne matière hermétique.

e conduit finit par un bac 313 de sortie de la crème chantilly, sur
equel est monté un vibrateur 314 pour fouetter la crème frâiche,
ors de son passage sous l'action de l'air comprimé.

e module de base frontal constitue le réservoir de crème frâiche
ans lequel est placée une came d'aspiration 315 avec une crépine en
.out.

.ette came est en communication avec le conduit 312.

.a réfrigération du réservoir de crème fraîche est assurée de la
nême façon que celle du réservoir de jus de druits (fig. 3).
.a réfrigération du fond de ce réservoir est assurée par une chambre
froide 316 constituée de deux petites cavités des modules 310 et 208.
.ette chambre est réfrigérée de la même façon que les bacs de régulation de la pression de liquide (figure 3), elle est isolée de tous
les côtés sauf du côté du réservoir de crème.

L'eau de condensation dans cette chambre est évacuée à l'aide d'un
tuyau 317 vers le bac 206.

Un circuit électronique 218 de type adapté, permet d'avoir une quantité
pré-déterminée et réglable de crème chaque fois qu'on appuie sur un
bouton poussoir 219.
Ce circuit peut être supprimé ; dans ce cas, la machine fonctionne en
appuyant simplement sur le bou.. . 219.

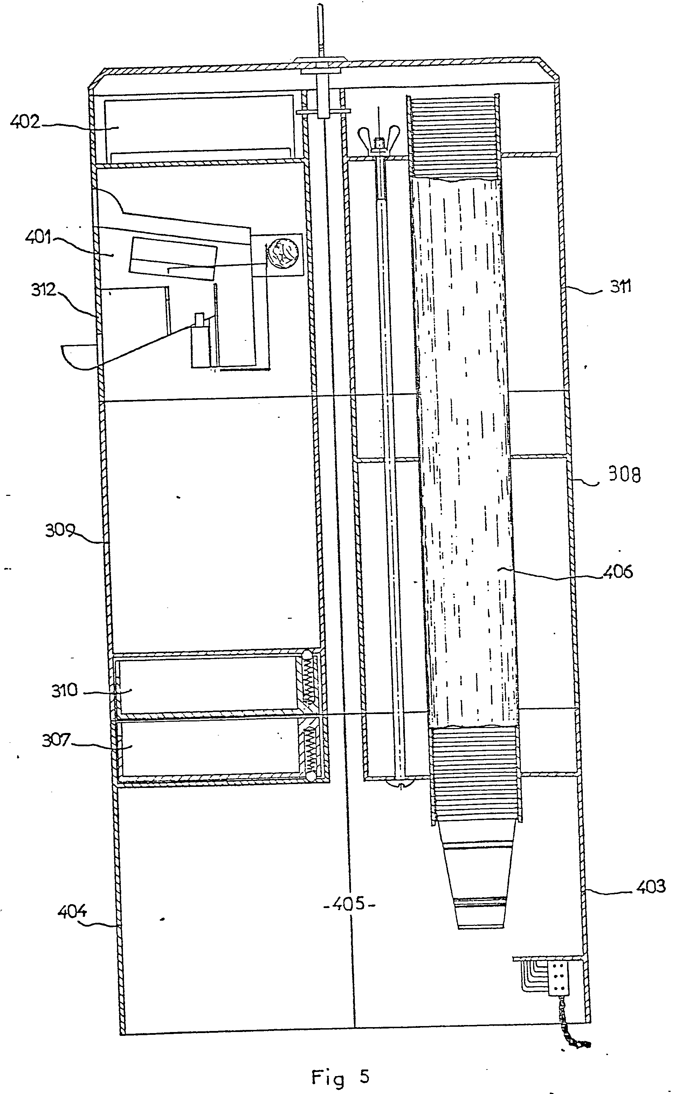

Sur la figure 5 est présentée une machine distributrice de gobelets. Cette machine contient un sélecteur de monnaie 101 et un circuit éle tronique 102 qui constituent une unité de contrôle et de comman pour brancher à une des précédentes machines si l'on veut mettre cet dernière en libre service.

Cette machine est construite de six modules de base sur trois étages

- le premier étage est composé de deux modules de base 403 et 404 mis c à dos, les deux petites cavités sont tournées vers le haut, deux parc latérales adjacentes sont supprimées pour donner un accès 405 à l colonne 406 porteuse de gobelets traversant les trois étages de la m chine.
La petite cavité du module frontal contient un tiroir 307 destiné stocker des accessoires comme du sucre ou autre.

- Le deuxième étage est composé de deux modules de base 308 et 309, r dos à dos.
Le module de base frontal a la petite cavité tournée vers le bas, ce dernière contient un tiroir 310 identique au tiroir 307.
Le module de base arrière a la petite cavité tournée, soit vers le hai soit vers le bas.

- Le troisième étage est composé de deux modules de base 311 et 312 dos à dos ; le module de base frontal a la petite cavité tournée v le haut et le module de base arrière a la petite cavité tournée vers haut.

Toutes les machines que l'on vient de décrire sont construites à par de modules de base identiques et peuvent être couplées les unes autres pour offrir ainsi un grand choix de combinaisons.

ɔutres machines peuvent être construites à partir de ce module de

ʒe.

a donné ces modèles de machines réalisées à titre d'exemple explitif et non limitatif.


va de soi que la présente invention peut recevoir tous  aménagements
toutes variantes sans pour autant sortir du cadre du présent brevet.

REVENDICATIONS                                    0158579

R1/ Machine de fabrication et/ou de distribution de produits alimentaires liquides ou pâteux, froids ou chauds, ces produits alimentaires pouvant être par exemple, soit un mélange d'une poudre soluble et d'eau comme par exemple le café à base de café soluble et
d'eau, le chocolat à base de poudre de chocolat et de lait déshydraté et d'eau ou le jus de fruits à base de poudre correspondante
et d'eau, soit un liquide réfrigéré et distribué par la machine,
soit un mélange de produit pâteux et d'air comme la crème chantilly, la dite machine pouvant être également distributrice d'objets tels que des gobelets, la dite machine étant caractérisée en
ce qu'elle est construite à partir de modules de base identiques,
chacun des modules étant un boitier parallèlépipédique droit comprenant deux parois latérales (1) et (2), une paroi avant (3) et une
paroi arrière (4), une cloison horizontale (5) le divisant en deux
cavités inégales , une petite cavité et une grande cavité, le dit
boitier étant ouvert à sa base et à son sommet, en ce que ces modules de base sont superposés et juxtaposés dans un sens ou dans
l'autre en sorte que, selon le besoin, la cloison horizontale soit
tournée, soit vers le haut, soit vers le bas, les parois arrières
étant en vis à vis l'une de l'autre, les modules étant mis dos à
dos deux par deux, l'assemblage par superposition de paires de ces
modules servant à contenir et à fixer des différents organes de la
dite machine.


R2/ Machine selon la revendication 1 caractérisée en ce que les deux
parois latérales d'un module de base dépassent la paroi arrière en
réalisant chacune une aile (8) et (9), ces ailes coopérant avec des
ailes semblables d'un autre module de base mis dos à dos par rapport au premier, formant ainsi un intervalle entre ces deux modules
assemblés.

19 0158579

R3/ Machine selon la revendication 1 caractérisée en ce que chaque module de base est doté d'alésages transversaux (11) débouchant ou borgnes pour placer des pitons de positionnement ou des tiges reliant ainsi les modules de base superposés avec précision.

R4/ Machine de fabrication et de distribution de produits alimentaires liquides froids ou chauds à base de poudre soluble et d'eau selon les revendications 1, 2 et 3, caractérisée en ce qu'elle est construite en deux ou trois étages avec quatre ou six modules de base jumelés deux par deux :

- le premier étage étant composé de deux modules de base (104) et (105) mis dos à dos, les deux petites cavités étant tournées vers le bas, le module de base frontal contenant un mélangeur (111), une vasque (110) receveuse livreuse de poudre et d'eau, et un extracteur de buée (113), le module de base arrière contenant un moteur d'entrainement général (106) et un circuit intégré blindé (107), une électro-vanne (108) pour raccordement direct sur le réseau d'eau courante, dans ce cas, la machine n'ayant pas de réservoir d'eau,

- le deuxième étage étant composé de deux modules de base mis dos à dos (119) et (120), le module de base frontal ayant la petite cavité tournée vers le bas, ce module constituant la réserve de poudre et comprenant un mécanisme de dosage, le module de base arrière dont la petite cavité est tournée vers le haut et contenant un élément de chauffe (130) ou de réfrigération de l'eau de préparation de la boisson,

- le troisième étage étant composé de deux modules de base mis dos à dos (100) et (101), les deux petites cavités étant tournées vers le bas, ces deux modules étant en communication entre eux, constituant ainsi une grande réserve d'eau dans le cas où la machine est autonome en alimentation en eau.

R5/ Machine selon les revendications 1 et 4 caractérisée en ce que le système du dosage est composé de plusieurs doseurs cylindriques (126) ouverts à leur niveau inférieur et supérieur qui sont placés verticalement entre deux disques coaxiaux (121) et (122) situés au-dessus d'un réservoir de la poudre et en communication avec celle-ci, munis de deux ouvertures décalées d'un quart de tour pour permettre le remplissage et l'évacuation de ces doseurs avec de la poudre en faisant un tour complet, ces doseurs peuvent être utilisés tout ou partie selon la dose totale voulue.

R6/ Machine selon les revendications 1 et 4 dans laquelle le système de dosage est un tiroir sans fond (601) coulissant horizontalement dans une glissière (602) dont le fond est doté d'une ouverture (603) en regard de laquelle vient se disposer le tiroir sans fond, ce tiroir (601) pouvant occuper deux positions, une position de. chargement dans laquelle le dit tiroir étant disposé en regard du fond (604) de la glissière et au dessous du réservoir de poudre ou une position de déchargement en regard de l'ouverture (603), ce tiroir occupant normalement la première position, c'es-à-dire étant rempli de poudre, caractérisé en ce qu'un bras mécanique (606) le pousse vers la deuxième position pour être déchargée, qu'un ressort de rappel non présenté le ramène vers la première position, que le côté (605) pénétrant dans la poudre pendant le retour à la première position a une forme biseautée pour faciliter cette pénétration, le nombre de décharges effectué successivement présentant une dose.

R7/ Machine selon les revendications 1,4,5 et 6 caractérisée en ce que la vasque receveuse livreuse (110) située au-dessous du système de dosage est d'un diamètre plus grand que les deux disques du systèm de dosage pour permettre de recevoir la poudre envoyée par ce système de dosage en sa totalité réduisant ainsi la périodicité de

nettoyage de la machine nécessitée par la chute de poudre au fond de celle-là.

R8/ Machine selon la revendication 7 caractérisée par un racloir rotatif (112) qui épouse la forme intérieure de la vasque, et qui effectue le même mouvement rotatif que les deux disques du système de dosage éliminant ainsi tout risque d'accumulation de la poudre dans un endroit quelconque de la vasque.

R9/ Machine selon la revendication 4 caractérisée par un bac (116) de récupération de déchets et d'eaux sales qui est siué au niveau inférieur du module de base frontal du premier étage occupant sa petite cavité, ce bac étant coulissant et escamotable et pouvant être ouvert et utilisé alors pour porter un gobelet ou bien fermé et donc escamoté pour laisser la place à un récipient volumineux.

R10/ Machine de fabrication et/ou de distribution de produits alimentaires liquides ou pâteux réfrigérés selon les revendications 1 à 3 caractérisée en ce que elle est construite en trois étages avec six modules de base :
- le premier étage étant composé de deux modules de base mis dos à dos (201) et (202), les deux petites cavités étant tournées vers le bas, les deux parois arrières de deux modules de base étant supprimées pour laisser un espace composé de deux grandes cavités,
- le deuxième étage étant composé de deux modules de base mis dos à dos (207) et (208), les deux grandes cavités étant tournées vers le bas, les deux parois arrières de deux modules de base étant supprimées pour laisser un espace composé de deux grandes cavités, ce dernier constituant avec celui du premier étage un espace composé de quatre grandes cavités pour contenir une unité hermétique frigorifique et un condenseur,
- le troisième étage étant composé de deux modules de base, mis dos à

0158579

... , les deux petites cavités étant tournées vers le bas, les deux grandes cavités peuvent être, soit en communication entre elles pour former un grande reservoir de liquide ou soit séparée.

R11/ Machine selon la revendication 10 caractérisée en ce que les modules de base composant le troisième étage sont posés sur ceux du deuxième étage sans liaison et qu'ils ne sont pas reliés au circuit de refrigération.

R12/ Machine selon la revendication 10 caractérisée en ce que dans l'espace constitué de deux petites cavités entre le deuxième et le troisième étage, un manchon métallique étanche par rapport au fond de la petite cavité du deuxième étage assure le contact thermique et donc la réfrigération de cet espace qui contient ou non un bac de régulation de pression de liquide.

R13/ Machine distributrice d'objets tels que des gobelets et qui peut contenir un sélecteur de monnaie ou autre, selon les revendications 1 à 3 caractérisée en ce qu'elle est construite en trois étages avec six modules de base :
- le premier étage étant composé de deux modules de base mis dos à dos (403) et (404), les deux petites cavités étant tournées vers le haut, deux parois latérales adjacentes étant supprimées pour donner accès à une colonne porteuse de gobelets (406) traversant les trois étages, la petite cavité du module de base frontal contenant un tiroir (307),
- le deuxième étage étant composé de deux modules de base mis dos à dos, le module de base frontal ayant sa petite cavité tournée vers le bas et contenant un tiroir (310) et le module de base arrière ayant sa petite cavité tournée, soit vers le haut, soit vers le bas,

- le troisième etage étant composé de deux modules de base mis dos à dos, le module de base frontal ayant sa grande cavité tournée vers le haut et contenant un sélecteur de monnaie (401) et le module de base arrière ayant disposé sa petite cavité tournée vers le haut.

Fig 1

Fig 2

0158579

Fig 3

Fig 4

Fig 5

0158579

606

606

504

603

605

601

602

Fig6(a)

Fig6(c)

Fig6(b)

Fig6(d)

**0158579**
Numéro de la demande

Office européen
des brevets

**RAPPORT DE RECHERCHE EUROPEENNE**

EP 85 45 0007

## DOCUMENTS CONSIDERES COMME PERTINENTS

| Categorie | Citation du document avec indication en cas de besoin des parties pertinentes | Revendication concernee | CLASSEMENT DE LA DEMANDE (Int Cl 4) |
|---|---|---|---|
| A | GB-A-2 019 201 (INVENTUM) * En entier * | 1 | A 47 J 31/40 |
| A | US-A-1 665 728 (CANRIGHT) | | |
| A | US-A-2 876 806 (KIRK et al.) | | |
| A | US-A-2 954 145 (McCAULEY) | | |

DOMAINES TECHNIQUES
RECHERCHES (Int Cl.4)

A 47 J
B 67 D
G 07 F

Le présent rapport de recherche a été établi pour toutes les revendications

| Lieu de la recherche | Date d'achèvement de la recherche | Examinateur |
|---|---|---|
| LA HAYE | 24-06-1985 | SCHARTZ J. |